# EUROPÄISCHE PATENTSCHRIFT

(11) **EP 4 485 851 B1**
(45) Veröffentlichungstag und Bekanntmachung des Hinweises auf die Patenterteilung: **14.01.2026**
(21) Anmeldenummer: 23182870.8
(22) Anmeldetag: 30.06.2023
(51) Int. Cl.: H04L 9/40, H04L 67/12, H04L 9/32, G05B 19/418

(54) **VERFAHREN ZUR KOMMUNIKATION IN EINEM INDUSTRIELLEN KONTROLLSYSTEM UND INDUSTRIELLES KONTROLLSYSTEM**
METHOD FOR COMMUNICATING IN AN INDUSTRIAL CONTROL SYSTEM AND INDUSTRIAL CONTROL SYSTEM
PROCÉDÉ DE COMMUNICATION DANS UN SYSTÈME DE COMMANDE INDUSTRIEL ET SYSTÈME DE COMMANDE INDUSTRIEL

(43) Veröffentlichungstag der Anmeldung: 01.01.2025
(73) Patentinhaber: Siemens Aktiengesellschaft, 80333 München (DE)
(72) Erfinder: Aschauer, Hans, 81829 München (DE); Becker, Stefan, 91325 Adelsdorf (DE); Falk, Rainer, 85435 Erding (DE); Feist, Christian Peter, 80689 München (DE); Laurig, Frank, 92369 Sengenthal (DE); Palmin, Anna, 76187 Karlsruhe (DE)
(74) Vertreter: Siemens Patent Attorneys

(56) Entgegenhaltungen:
- EP-A1- 3 716 569
- DE-A1- 102017 124 821
- US-A1- 2017 111 292

## Beschreibung

Unabhängig vom grammatikalischen Geschlecht eines bestimmten Begriffes sind Personen mit männlicher, weiblicher oder anderer Geschlechteridentität mit umfasst.

Die Erfindung betrifft ein Verfahren zur Kommunikation in einem industriellen Kontrollsystem und ein industrielles Kontrollsystem.

Unter einem industriellen Kontrollsystem wird ein so genanntes OT (Operational Technology)-System verstanden, das Hardware und Software umfasst, die zur Steuerung und Regelung, Überwachung und Kontrolle von Maschinen, Anlagen und Prozessen verwendet werden. Das industrielle Kontrollsystem oder OT-System stellt ein geschlossenes System dar, dessen Komponenten mit proprietären Protokollen kommunizieren. Diese Komponenten umfassen insbesondere sog. OT-Geräte. Ein OT-Gerät bezeichnet eine Hardware und/oder Software, welche innerhalb des industriellen Kontrollsystems zur Steuerung und Regelung, Überwachung und Kontrolle von Maschinen, Anlagen und Prozessen genutzt wird.

Beim Zugriff auf Applikations-Dienste über ein Kommunikationsnetzwerk und der von diesen Diensten bereitgestellten Ressourcen muss bislang an einer Stelle entschieden werden, welcher Benutzer oder welches OT-Gerät auf welchen Dienst unter welchen Umständen zugreifen darf. Dazu muss sich normalerweise der Benutzer oder das OT-Gerät authentisieren ("Wer bin ich"), und basierend darauf wird entschieden, welche Berechtigungen erteilt werden ("Was darf ich").

Herkömmlich wird jeder Dienst so konfiguriert, dass basierend auf einer Anmelde-Information (wie Benutzername und Passwort) die entsprechenden Berechtigungen durch die Anwendung erteilt werden, die den Applikations-Dienst implementiert.

Um einerseits die Bedienbarkeit zu verbessern und andererseits die Administration von OT-Geräten in dem industriellen Kontrollsystem zu vereinfachen, geht man dazu über, die Authentisierung in einen eigenen Authentifizierungsdienst (Identity and Access Management, IAM) auszulagern. In diesem Dienst ist zentral konfiguriert, welche Dienste eines angefragten OT-Geräts welcher Benutzer oder welches OT-Gerät unter welchen Umständen benutzen darf. Dies entspricht einer Autorisierungsinformation. Die Autorisierungsinformation wird dann an einen Applikations-Dienst des angefragten OT-Geräts weitergeleitet, der die erlaubten Zugriffe ermöglicht und andere blockiert. Hierdurch soll in dem industriellen Kontrollsystem eine robuste und sichere Kommunikation zwischen den OT-Geräten ermöglicht werden.

In der EP 4 228 204 A1 der Anmelderin wurde hierzu vorgeschlagen, einen als so genannten Channel bezeichneten Kommunikationskanal zu nutzen, der eine Kommunikationsbeziehung zwischen zwei Kommunikationspartnern - einer ersten Recheneinheit, wie z.B. ein OT-Gerät, und einem Anwendungs-Dienst oder Service einer anderen Recheneinheit - beschreibt, die von dem Authentifizierungsdienst geregelt wird. Der Kommunikationskanal besteht aus Informationen, die zwischen den Kommunikationspartnern geteilt wird und durch den Aufbau des Kommunikationskanals besteht. Die geteilte Information kann durch geeignete Mechanismen, z.B. kryptographische Methoden, an eine Autorisierungsinformation gebunden sein. Die Autorisierungsinformation stellt ein Token dar, das eine Gültigkeitsdauer oder eine Ablaufzeit hat. Nach Ablauf der Gültigkeitsdauer bzw. Ablaufzeit des Tokens muss dabei kein neuer Kommunikationskanal aufgebaut werden. Vielmehr kann ein bestehender Kommunikationskanal weiter benutzt werden, sofern die anfragende Recheneinheit gegenüber der zweiten Recheneinheit (einem Anwendungs-Dienst oder einem Client) ein neues Token präsentiert, das sich vom vorherigen Token in genau definierten Attributen unterscheidet, z.B. nur in der neuen Gültigkeitsdauer. Alternativ zu einem neuen Token mit veränderter Gültigkeitsdauer kann durch den Autorisierungsdienst auch ein neues Token ausgestellt werden, das ein bestehendes Token referenziert und dessen Gültigkeitsdauer verlängert. Hierzu kann es beispielsweise dessen Hash-Wert als Attribut enthalten.

Das in der EP 4 228 204 A1 beschriebene Vorgehen ermöglicht eine zentrale Authentifizierung der Kommunikationspartner und dadurch in dem industriellen Kontrollsystem eine robuste und sichere Kommunikation der OT-Geräte. Die Verfügbarkeit der Kommunikation der OT-Geräte hängt von der Verfügbarkeit des Authentifizierungsdienstes ab. In einem industriellen Kontrollsystem ist der Ausfall von OT-Geräten nicht akzeptabel und die Hochverfügbarkeit (24/7, d.h. 24 Stunden, 7 Tage die Woche) eine zwingende Voraussetzung.

In der EP 3 716 569 A1 wird ein Mechanismus zum Aufbau sicherer Remote-Verbindungen im industriellen Internet der Dinge für Zielgeräte ohne direkte Internetverbindung vorgestellt. Für die Kommunikation zwischen einem Benutzergerät und einem Zielgerät wird ein Tunnel über eine Kette vertrauenswürdiger, zertifikatsbasierter Punkt-zu-Punkt-Verbindungen über ein oder mehrere Zwischen-Gateways eingerichtet. Dabei wird in jedem der Zwischen-Gateways in der Kette ein ausgehender Port verwendet.

In der US 2017/111 292 A1 wird ein Verfahren und ein zugehöriges System offenbart. Der Ablaufzeitpunkt eines Tokens für den Zugriff auf einen Dienst wird ermittelt. Die Erreichbarkeit des Dienstes wird anhand des Ablaufzeitpunkts des Tokens ermittelt. Wird festgestellt, dass der Dienst nicht erreichbar ist, wird anhand der Zugriffsinformationen zum Dienst ein späterer Ablaufzeitpunkt des Tokens ermittelt.

Es ist Aufgabe der Erfindung, ein Verfahren zur Kommunikation in einem industriellen Kontrollsystem sowie ein industrielles Kontrollsystem bereitzustellen, welche eine hohe Verfügbarkeit unterstützen.

Diese Aufgaben werden gelöst durch ein Verfahren gemäß den Merkmalen des Anspruchs 1, ein Computerprogrammprodukt gemäß den Merkmalen des Anspruches 9 und ein industrielles Kontrollsystem gemäß den Merkmalen des Anspruches 10. Vorteilhafte Ausgestaltungen ergeben sich aus den abhängigen Ansprüchen.

Es wird ein Verfahren zur Kommunikation in einem industriellen Kontrollsystem vorgeschlagen, das auf dem in der EP 4 228 204 A1 beschriebenen Verfahren basiert. Der in dieser Anmeldung beschriebene Inhalt wird durch Bezugnahme vollständig aufgenommen. Das industrielle Kontrollsystem (= OT-System), umfasst ein erstes, eine Kommunikation initiierendes OT-Gerät und ein zweites OT-Gerät sowie einen Authentifizierungsdienst. Das erste OT-Gerät und/oder das zweite OT-Gerät stellen Kommunikationspartner dar, und können in Gestalt von Recheneinheiten und/oder auf diesen ablaufenden Anwendungs/Applikations-Diensten bestehen. Zum Kommunikationsaufbau und zur Aufrechterhaltung eines zwischen dem ersten und dem zweiten OT-Gerät aufgebauten, logischen Kommunikationskanals ist die erfolgreiche Autorisierung eines Tokens (Autorisierungsinformation) durch das zweite OT-Gerät erforderlich. Das Token ist durch den Authentifizierungsdienst erzeugt und wird dem ersten OT-Gerät zur Übertragung und Überprüfung an das zweite OT-Gerät bereitgestellt, wenn das erste OT-Gerät vorbestimmte Kriterien erfüllt. Wenn das Token vor Ablauf einer ihm zugeordneten Gültigkeitsdauer oder Ablaufzeit nicht erneuert wird, wird der logische Kommunikationskanal durch das zweite OT-Gerät abgebaut.

Unter dem Begriff der "erfolgreichen Autorisierung eines Tokens" ist insbesondere eine Überprüfung des Tokens zu verstehen, durch die ermittelt wird, ob das Token gültig ist und ob es die Kommunikation zwischen dem ersten und dem zweiten OT-Gerät autorisiert.

Um die Hochverfügbarkeit des industriellen Kontrollsystems und seiner Komponenten auch dann sicherzustellen, wenn der Authentifizierungsdienst, z.B. aufgrund von Hardware- oder Softwareseitigen Fehlfunktionen, nicht zur Verfügung steht, ist erfindungsgemäß vorgesehen, dass das Token durch das zweite OT-Gerät zur Autorisierung des logischen Kommunikationskanals über seine Gültigkeitsdauer oder Ablaufzeit hinaus verarbeitet wird. Es wird dabei über die im Token angegebene Gültigkeitsdauer oder Ablaufzeit hinaus verarbeitet und akzeptiert. Das Token, dessen Gültigkeitsdauer überschritten ist oder dessen Ablaufzeit erreicht ist, wird als ungültiges Token bezeichnet. Die Gültigkeitsdauer oder Ablaufzeit eines Tokens kann z.B. ablaufen, ohne dass die Bereitstellung eines Folge-Tokens zwischen dem ersten OT-Gerät und dem Authentifizierungsdienst erfolgt, beispielsweise da die Bereitstellung nicht möglich ist oder fehlschlägt. Eine Verbindung zwischen dem Authentifizierungsdienst und dem das Token anfragenden ersten OT-Gerät ist beispielsweise dann nicht möglich, wenn ein Verbindungsaufbau zum Authentifizierungsdienst fehlschlägt, der Authentifizierungsdienst nicht erreichbar ist oder einzelnen Dienste des Authentifizierungsdienstes nicht zur Verfügung stehen.

Durch das vorgeschlagene Vorgehen ergibt sich der Vorteil, dass in den vorbeschriebenen Situationen der Abbau der logischen Kommunikationsverbindung vermieden werden kann, wodurch der logische Kommunikationskanal zwischen dem ersten und dem zweiten OT-Gerät aufrechterhalten werden kann. Dadurch wird die Funktion des industriellen Kontrollsystems im Gesamten weiter aufrechterhalten und dadurch die gewünschte Hochverfügbarkeit sichergestellt. Ermöglicht wird dies dadurch, dass das letzte verwendete Token über seine Gültigkeitsdauer oder Ablaufzeit hinaus eingesetzt wird, um den Verbindungsabbau des logischen Kommunikationskanals zu vermeiden und den Zugriff auf die Komponenten, insbesondere das zweite OT-Gerät, zu gewährleisten.

In einer zweckmäßigen Ausgestaltung kann weiterhin vorgesehen sein, dass das ungültige Token durch das zweite OT-Gerät zum Aufbau eines logischen Kommunikationskanals verwendet wird. Diese Ausgestaltung ermöglicht es, bei einem erst aufzubauenden logischen Kommunikationskanal zwischen dem ersten und dem zweiten OT-Gerät das ungültige Token für den Aufbau des logischen Kommunikationskanals zu verwenden, falls die Bereitstellung eines Tokens zwischen dem ersten OT-Gerät und dem Authentifizierungsdienst nicht möglich ist oder fehlgeschlagen ist.

Es ist weiterhin zweckmäßig, wenn das erste OT-Gerät, wenn die Bereitstellung eines Folge-Tokens zwischen dem ersten OT-Gerät und dem Authentifizierungsdienst nicht möglich ist oder fehlschlägt, in einen Alarmmodus wechselt und eine den Alarmmodus repräsentierende Statusinformation an das zweite OT-Gerät überträgt. Insbesondere wird das zweite OT-Gerät beim Empfang der Statusinformation dazu veranlasst, das ungültige Token für die Autorisierung zu verarbeiten. Die Statusinformation kann somit als Trigger verwendet werden, dass das zweite OT-Gerät das ungültige Token zur Autorisierung des logischen Kommunikationskanals akzeptiert.

In diesem Zusammenhang ist es weiterhin zweckmäßig, wenn das zweite OT-Gerät beim Empfang der Statusinformation dazu veranlasst wird, ebenfalls in einen Alarmmodus zu wechseln.

Gemäß einer weiteren zweckmäßigen Ausgestaltung ist vorgesehen, dass das erste OT-Gerät, wenn die Bereitstellung eines Folge-Tokens zwischen dem ersten OT-Gerät und dem Authentifizierungsdienst wieder möglich ist, in einen Normalmodus wechselt. Der Empfang oder Erhalt des Folge-Tokens von dem Authentifizierungsdienst kann als Trigger verwendet werden, von dem Alarmmodus in den Normalmodus zu wechseln.

Es ist weiterhin zweckmäßig, wenn das erste OT-Gerät zusammen mit der aktualisierten Statusinformation, die den Normalmodus repräsentiert den Folge-Token an das zweite OT-Gerät zur Verarbeitung und Autorisierung überträgt. Die aktualisierte Statusinformation und das Folge-Token können auch zeitlich aufeinander folgend an das zweite OT-Gerät übertragen werden. Beim Erhalt des Folge-Tokens und/oder der den Normalmodus repräsentierenden Statusinformation ist das zweite OT-Gerät darüber in Kenntnis gesetzt, dass die Kommunikation wieder in herkömmlicher Weise erfolgt, d.h. ein Token mit einer Gültigkeitsdauer oder Ablaufzeit vor dessen Ablauf durch ein Folge-Token "erneuert" wird. Hierdurch kann die eingangs beschriebene hohe Kommunikationssicherheit bereitgestellt werden. Darüber hinaus ist es zweckmäßig, wenn das zweite OT-Gerät beim Empfang des Folge-Tokens von dem Alarmmodus in den Normalmodus wechselt.

Gemäß einem zweiten Aspekt wird ein Computerprogrammprodukt vorgeschlagen, das Befehle umfasst, die bei der Ausführung des Programms durch einen Computer diesen veranlassen, das Verfahren oder eine oder mehrere Ausgestaltungen davon auszuführen.

Gemäß einem weiteren Aspekt wird ein industrielles Kontrollsystem (OT-System) vorgeschlagen, das ein erstes, eine Kommunikation initiierendes OT-Gerät und ein zweites OT-Gerät sowie einen Authentifizierungsdienst umfasst. Der Authentifizierungsdienst ist eingerichtet, ein Token zu erzeugen, wenn das erste OT-Gerät vorbestimmte Kriterien erfüllt und weiter eingerichtet, das Token dem ersten OT-Gerät bereitzustellen. Das erste OT-Gerät ist eingerichtet, das von dem Authentifizierungsdienst empfangene Token an das zweite OT-Gerät zu übertragen. Das zweite OT-Gerät ist eingerichtet, das Token auf Autorisierung zu überprüfen, und bei erfolgreicher Autorisierung einen zwischen dem ersten dem zweiten OT-Gerät aufgebauten, logischen Kommunikationskanal aufrechtzuerhalten, und wenn das Token vor Ablauf der Gültigkeitsdauer oder **Ab**laufzeit nicht erneuert wird, den logischen Kommunikationskanal abzubauen. Weiter ist das zweite OT-Gerät erfindungsgemäß eingerichtet, das Token zur Autorisierung des logischen Kommunikationskanals über seine Gültigkeitsdauer oder Ablaufzeit als ungültiges Token hinaus zu verarbeiten, wenn die Bereitstellung eines Folge-Tokens zwischen dem ersten OT-Gerät und dem Authentifizierungsdienst nicht möglich ist oder fehlgeschlagen ist. Weiterhin ist es möglich, dass das zweite Gerät überprüft, ob ein Bereitstellen eines zweiten Tokens für das zweite Gerät erfolgt. Nur wenn dies nicht erfolgt, verarbeitet das zweite Gerät das vom ersten Gerät erhaltene ungültige Token.

Das Kontrollsystem ist ferner eingerichtet, eine oder mehrere bevorzugte Ausführungsformen des erfindungsgemäßen Verfahrens auszuführen.

Die Erfindung wird nachfolgend näher unter Bezugnahme auf die Zeichnung erläutert. Es zeigen:
- Fig. 1: eine schematische Darstellung eines erfindungsgemäßen industriellen Kontrollsystems gemäß einer ersten Ausgestaltungsvariante; und
- Fig. 2: eine schematische Darstellung eines erfindungsgemäßen industriellen Kontrollsystems gemäß einer zweiten Ausgestaltungsvariante.

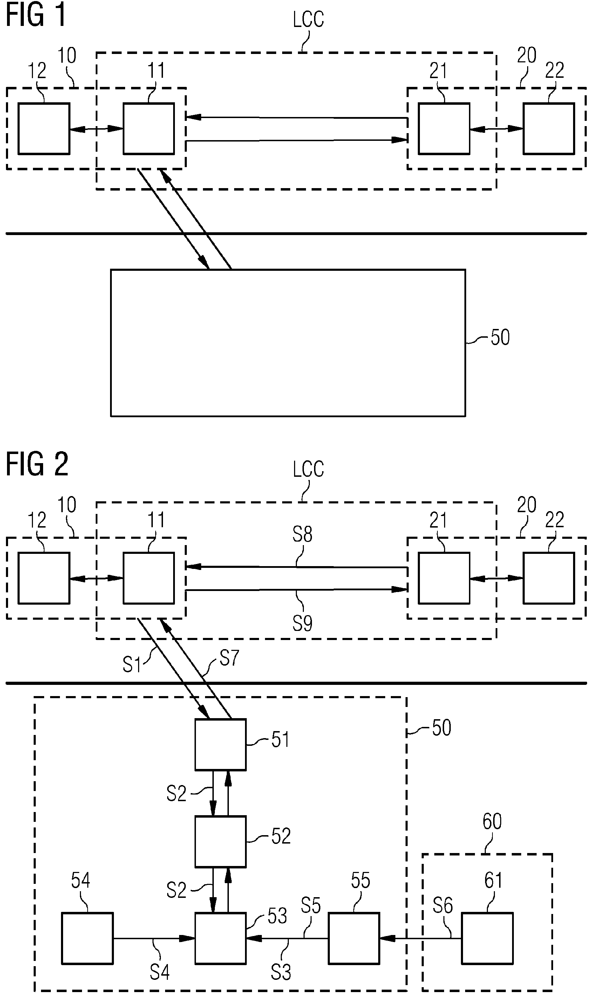

Fig. 1 zeigt ein erstes Ausführungsbeispiel eines industriellen Kontrollsystems. Dieses umfasst ein erstes, eine Kommunikation initiierendes OT (Operational Technology)-Gerät 10, ein zweites OT-Gerät 20 und einen Authentifizierungsdienst 50.

Das OT-Gerät 10 umfasst einen ersten Vertrauensdienst (Software) 11 und eine erste Recheneinheit 12. Der erste Vertrauensdienst 11 kann auf der ersten Recheneinheit 12 ablaufen. Der erste Vertrauensdienst 11 kann auch auf einer von der ersten Recheneinheit 12 gesonderten, nicht dargestellten Recheneinheit laufen.

In entsprechender Weise umfasst das zweite OT-Gerät 20 einen zweiten Vertrauensdienst 21 (Software) und eine zweite Recheneinheit 22. Der zweite Vertrauensdienst 21 kann auf der zweiten Recheneinheit 22 ausgeführt werden. Der zweite Vertrauensdienst 21 kann auch auf einer, von der zweiten Recheneinheit 22 gesonderten, nicht dargestellten Recheneinheit ausgeführt werden.

Die erste Recheneinheit 12 des ersten OT-Geräts 10 und die zweite Recheneinheit 22 des zweiten OT-Geräts 20 stellen nicht sichere Kommunikationspartner dar. Demgegenüber sind der erste Vertrauensdienst 11 und der zweite Vertrauensdienst 21 "sichere Komponenten". Der erste und der zweite Vertrauensdienst 11, 21 können beispielsweise als Proxies ausgebildet sein.

Das erste und das zweite OT-Gerät 10, 20 bzw. deren Vertrauensdienste 11, 21 kommunizieren über einen logischen Kommunikationskanal LCC, wobei dessen Aufbau erst nach einer Autorisierung durch das zweite OT-Gerät 20 erfolgt. Wenn aufgebaut, können über den logischen Kommunikationskanal LCC Daten zwischen den OT-Geräten 10, 20 bzw. deren Vertrauensdienste 11, 21 in beiden Richtungen übertragen werden.

Die OT-Geräte 10, 20 und der logische Kommunikationskanal LCC sind Komponenten des industriellen Kontrollsystems, **d.h.** eines OT (Operational Technology)-Systems. Demgegenüber ist der Authentifizierungsdienst 50 Teil der klassischen IT (Information Technology).

Die Aufgabe des Authentifizierungsdiensts 50 besteht darin, auf Anforderung des OT-Geräts 10 bzw. dessen ersten Vertrauensdienst 11 bei Vorliegen entsprechender Kriterien ein Token (Autorisierungsinformation) auszustellen und an das erste OT-Gerät 10 bzw. dessen Vertrauensdienst 11 zu übertragen. Das erste OT-Gerät 10 bzw. dessen Vertrauensdienst 11 übertragt das Token an das zweite OT-Gerät 20 zur Autorisierung, um den Aufbau des logischen Kommunikationskanals LCC zu ermöglichen.

Dieses prinzipiell aus der EP 4 228 204 A1 bekannte Vorgehen wird nachfolgend unter Bezugnahme auf Fig. 2 beschrieben, in der weitere Komponenten des Authentifizierungsdienstes 50 dargestellt sind.

Der Authentifizierungsdienst 50 umfasst einen ersten bis fünften Dienst 51,...,55, deren jeweilige Funktion für den Aufbau des logischen Kommunikationskanals LCC nachfolgend im Detail näher erläutert wird. Ferner ist ein Informationsquellendienst 60 für den Authentifizierungsdienst 50 dargestellt. Die Anfrage zum Aufbau eines Kommunikationskanals zwischen den OT-Geräten 10, 20 erfolgt durch die erste Recheneinheit 12, z.B. aufgrund einer automatisierten Anfrage oder dem Empfang einer Nutzerinformation (z.B. einer Nutzereingabe in die erste Recheneinheit 12). Die erste Recheneinheit 12 gibt die Anfrage an den ersten Vertrauensdienst 11 weiter. In einem ersten Schritt S1 authentifiziert sich der erste Vertrauensdienst 11 gegenüber dem ersten Dienst 51, einem Authentifizierungsdienst. Zusätzlich authentifiziert sich der Initiator der Anfrage, d.h. die erste Recheneinheit 12 oder ein die erste Recheneinheit 12 bedienender Nutzer, gegenüber dem ersten Dienst 51. Hierdurch wird ein Nachweis über die Identitäten, sowohl des ersten Vertrauensdienstes 11 als auch des Initiators der Anfrage (menschlicher Benutzer oder die erste Recheneinheit 12) etabliert. In Schritt S2 werden die Identitäten des ersten Vertrauensdienstes 11 und des Initiators der Anfrage von dem ersten Dienst 51 an den zweiten Dienst 52 (Policy Enforcement Point, PEP) übertragen, welcher eine Anfrage zur Durchführung einer Entscheidung an den dritten Dienst 53 (Policy Decision Point, PDP) stellt.

In Schritt S3 erfolgt durch den dritten Dienst 53 die Entscheidung, ob der Initiator der Anfrage, d.h. die erste Recheneinheit 12 oder der die erste Recheneinheit bedienende Nutzer, die Erlaubnis erhält, mit dem zweiten OT-Gerät 20 und insbesondere dessen zweiter Recheneinheit 22 basierend auf vordefinierten Zugriffsrechten, zu kommunizieren.

In Schritt S4 evaluiert der dritte Dienst 53 die Zugriffsrechte, die von einem vierten Dienst 54 (Policy Administration Point, PAP) bereitgestellt werden.

In Schritt S5 werden in einem Fall, in dem die Zugriffsrechte zusätzliche Attribute von anderen Informationsquellen benötigen, diese von einem fünften Dienst 55 (Policy Information Point, PIP) abgerufen. Diese Informationen werden dem fünften Dienst 55 gegebenenfalls in einem Schritt S6 von einem sechsten Dienst (OT Detection Services, OTDS) bereit gestellt. Der sechste Dienst 61 ist einer von mehreren (nicht weiter im Detail dargestellten) Informationsquellen 60. Beispielsweise kann der sechste Dienst 61 den fünften Dienst 55 darüber informieren, ob der die erste Recheneinheit 12 bedienende Benutzer oder die erste Recheneinheit 12 selbst kompromittiert sind oder ob die Konfiguration der ersten Recheneinheit 12 Kompatibilitätsprobleme für die Kommunikation mit dem zweiten OT-Gerät 20 aufweist.

Wenn sämtliche Informationen korrekt sind, wird durch den ersten Dienst 51 ein Token ausgestellt und in Schritt S7 an den ersten Vertrauensdienst 11 übermittelt.

In Schritt S8 überträgt der erste Vertrauensdienst 11 das Token zusammen mit einer Anfrage zum Aufbau des bereits erwähnten logischen Kommunikationskanals LCC an den zweiten Vertrauensdienst.

In Schritt S9 überprüft der zweite Vertrauensdienst 21 die in dem Token enthaltenen Information und, falls alle Informationen korrekt sind, autorisiert das erste OT-Gerät 10. Dann kann der logische Kommunikationskanal LCC zwischen den OT-Geräten 10, 20 bzw. deren Vertrauensdiensten 11, 21 aufgebaut werden.

Das von dem ersten Dienst 51 ausgestellte Token umfasst eine Gültigkeitsdauer oder Ablaufzeit. Der Betrieb des OT-Systems erfolgt dabei derart, dass nach dem Ablauf der Gültigkeitsdauer des Tokens nicht ein neuer logischer Kommunikationskanal aufgebaut werden muss, sondern dass der bestehende Kommunikationskanal LCC weiter benutzt werden kann, sofern das OT-Gerät 10, das die Anfrage initiiert hat, ein neues Token präsentiert, das sich vom vorherigen Token in vorbestimmen Attributen unterscheidet, z.B. in einer neuen Gültigkeitsdauer. Alternativ zu einem neuen Token mit veränderter Gültigkeitsdauer kann auch ein neuer Token durch den Authentifizierungsdienst 50 ausgestellt werden, das ein bestimmtes Token referenziert (indem es z.B. dessen Hash-Wert als Attribut enthält) und dessen Gültigkeitsdauer verlängert. Ebenso kann ein Token widerrufen, also für ungültig, erklärt werden. Das diesbezügliche Vorgehen ist in der bereits erwähnten EP 22 156 834.8 beschrieben.

Um die Hochverfügkarkeit des industriellen Kontrollsystems auch in dem Fall sicher zu stellen, dass einer der Dienste 51,..., 55, z.B. aufgrund softwareseitiger Fehlfunktion, des Authentifizierungsdienstes 50 ausfällt oder eine Kommunikation zwischen dem ersten OT-Gerät 10 und dem Authentifizierungsdienst 50 nicht möglich ist, schlägt die Erfindung vor, das zuletzt ausgestellte Token durch das zweite OT-Gerät 20 zur Autorisierung des logischen Kommunikationskanals LCC über seine Gültigkeitsdauer oder Ablaufzeit hinaus zu verwenden. Dadurch kann der Abbau der logischen Kommunikationsverbindung LCC vermieden werden, wodurch die Verfügbarkeit und der Zugriff auf die OT-Geräte weiterhin gewährleistet ist.

Auch ist es möglich, in diesem Fall den Aufbau einer neuen logischen Kommunikationsverbindung zuzulassen, obwohl das zur Authentisierung verwendete Token nicht mehr aktuell bzw. ungültig ist.

Wenn und sobald die Bereitstellung eines neuen Tokens, das als Folge-Token bezeichnet wird, zwischen dem ersten OT-Gerät bzw. dessen ersten Vertrauensdienst und dem Authentifizierungsdienst 50 nicht möglich ist oder fehlschlägt, wechselt das erste OT-Gerät 10 in einen Alarmmodus und überträgt eine den Alarmmodus repräsentierende Statusinformation an das zweite OT-Gerät 20. Dies ist zweckmäßig, da das zweite OT-Gerät 20 selbst keinen Kontakt zum Authentifizierungsdienst 50 haben muss oder hat. Durch den Empfang der Statusinformation, die den Alarmmodus repräsentiert, wird das zweite OT-Gerät 20 dazu veranlasst, dass aufgrund abgelaufener Gültigkeitsdauer oder überschrittener Ablaufzeit ungültige Token für die Autorisierung in der Zukunft zu verarbeiten. Optional kann das zweite OT-Gerät 20 beim Empfang der Statusinformation, die den Alarmmodus repräsentiert, ebenfalls in einen Alarmmodus wechseln.

Wenn das erste OT-Gerät 10 von dem Authentifizierungsdienst 50 wieder ein Token empfängt, wechselt dieses in einen Normalmodus und überträgt eine den Normalmodus repräsentierende Statusinformation, zusammen mit dem Token an das zweite OT-Gerät zur Verarbeitung und Autorisierung. Beim Empfang des (Folge-)Tokens wechselt das zweite OT-Gerät vom Alarmmodus in den Normalmodus zurück. Anschließend wird das übliche Vorgehen zur Autorisierung des logischen Kommunikationskanals LCC fortgeführt.

Ohne Redundanz vorsehen zu müssen, ermöglicht es das beschriebene Vorgehen, die Verfügbarkeit der Komponenten in einem OT-System zu gewährleisten, auch wenn die für die Autorisierung benötigten Komponenten im Authentifizierungsdienst 50 (als Teil eines IT-Systems) nicht oder temporär nicht verfügbar sind.

Automatisierungskomponenten sind speziell im Umfeld von Produktionen anderen Anforderungen ausgesetzt als bekannte IT-Anwendungen, wo der Fokus auf reiner Softwareapplikation liegt. In OT-Systemen sind immer Hardware und Software zu berücksichtigen. Das vorgeschlagene Vorgehen stellt sicher, dass die Verfügbarkeit von OT-Komponenten nicht unter einem Ausfall in der Authentifizierungskette leiden. Das OT-System kann auch ohne den Authentifizierungsdienst den sicheren Betrieb gewährleisten, da bestehende Verbindungen über die Gültigkeit des zuletzt vergebenen Tokens hinaus bestehen bleiben.

## Patentansprüche

1. Verfahren zur Kommunikation in einem industriellen Kontrollsystem, das ein erstes, eine Kommunikation initiierendes OT-Gerät (10) und ein zweites OT-Gerät (20) sowie einen Authentifizierungsdienst (50) umfasst, bei dem zur Aufrechterhaltung eines zwischen dem ersten und dem zweiten OT-Gerät (10, 20) aufgebauten, logischen Kommunikationskanals (LCC) die erfolgreiche Autorisierung eines Tokens mit vorgegebener Gültigkeitsdauer durch das zweite OT-Gerät (20) erforderlich ist, wobei das Token durch den Authentifizierungsdienst (50) erzeugt und dem ersten OT-Gerät (10) zur Übertragung und Überprüfung an das zweite OT-Gerät (20) bereitgestellt ist, wenn das erste OT-Gerät (10) vorbestimmte Kriterien erfüllt, wobei, wenn das Token vor Ablauf einer ihm zugeordneten Gültigkeitsdauer oder Ablaufzeit nicht erneuert wird, der Kommunikationskanal (LCC) abgebaut wird, **dadurch gekennzeichnet, dass**
- das Token durch das zweite OT-Gerät (20) zur Autorisierung des logischen Kommunikationskanals (LCC) über seine Gültigkeitsdauer oder Ablaufzeit als ungültiges Token hinaus verarbeitet wird, wenn die Bereitstellung eines Folge-Tokens zwischen dem ersten OT-Gerät (10) und dem Authentifizierungsdienst (50) nicht möglich ist oder fehlschlägt.

2. Verfahren nach Anspruch 1, **dadurch gekennzeichnet, dass** das ungültige Token durch das zweite OT-Gerät (20) zum Aufbau eines logischen Kommunikationskanals (LCC) verarbeitet wird.

3. Verfahren nach Anspruch 1 oder 2, **dadurch gekennzeichnet, dass** das erste OT-Gerät (10), wenn die Bereitstellung eines Folge-Tokens zwischen dem ersten OT-Gerät (10) und dem Authentifizierungsdienst (50) nicht möglich ist oder fehlschlägt, in einen Alarmmodus wechselt und eine den Alarmmodus repräsentierende Statusinformation an das zweite OT-Gerät (20) überträgt.

4. Verfahren nach Anspruch 3, **dadurch gekennzeichnet, dass** das zweite OT-Gerät (20) beim Empfang der Statusinformation dazu veranlasst wird, das ungültige Token für die Autorisierung zu verarbeiten.

5. Verfahren nach Anspruch 3 oder 4, **dadurch gekennzeichnet, dass** zweite OT-Gerät (20) beim Empfang der Statusinformation dazu veranlasst wird, in einen Alarmmodus zu wechseln.

6. Verfahren nach einem der Ansprüche 3 bis 5, **dadurch gekennzeichnet, dass** das erste OT-Gerät (10), wenn die Bereitstellung eines Folge-Tokens zwischen dem ersten OT-Gerät (10) und dem Authentifizierungsdienst (50) wieder möglich ist, in einen Normalmodus wechselt.

7. Verfahren nach Anspruch 6, **dadurch gekennzeichnet, dass** erste OT-Gerät (10) zusammen mit der Statusinformation, oder zeitlich aufeinander folgend, den Folge-Token an das zweite OT-Gerät (20) zur Verarbeitung und Autorisierung überträgt.

8. Verfahren nach Anspruch 7, **dadurch gekennzeichnet, dass** das zweite OT-Gerät (20) beim Empfang des Folge-Tokens von dem Alarmmodus in den Normalmodus wechselt.

9. Computerprogrammprodukt, umfassend Befehle, die bei der Ausführung des Programms durch einen Computer diesen veranlassen, das Verfahren nach einem der Ansprüche 1 bis 8 auszuführen.

10. Industrielles Kontrollsystem, umfassend ein erstes, eine Kommunikation initiierendes OT-Gerät (10) und ein zweites OT-Gerät (20) sowie einen Authentifizierungsdienst (50), wobei
- der Authentifizierungsdienst (50) eingerichtet ist, ein Token zu erzeugen, wenn das erste OT-Gerät (10) vorbestimmte Kriterien erfüllt, und das Token dem ersten OT-Gerät (10) bereitzustellen,
- das erste OT-Gerät (10) eingerichtet ist, das von dem Authentifizierungsdienst (50) empfangene Token an das zweite OT-Gerät (20) zu übertragen,
- das zweite OT-Gerät (20) eingerichtet ist, das Token auf Autorisierung zu überprüfen, und bei erfolgreicher Autorisierung einen zwischen dem ersten und dem zweiten OT-Gerät (10, 20) aufgebauten, logischen Kommunikationskanal (LCC) aufrecht zu erhalten, und, wenn das Token vor Ablauf der Gültigkeitsdauer nicht erneuert wird, den logischen Kommunikationskanal (LCC) abzubauen,
**dadurch gekennzeichnet, dass** das zweite OT-Gerät (20) weiter eingerichtet ist, das Token zur Autorisierung des logischen Kommunikationskanals (LCC) über seine Gültigkeitsdauer oder Ablaufzeit als ungültiges Token hinaus zu verarbeiten, wenn die Bereitstellung eines Folge-Tokens zwischen dem ersten OT-Gerät (10) und dem Authentifizierungsdienst (50) nicht möglich ist oder fehlgeschlagen ist.

11. Kontrollsystem nach Anspruch 10, das ferner eingerichtet ist, das Verfahren gemäß einem der Ansprüche 2 bis 8 auszuführen.

## Claims

1. Method for communication in an industrial control system comprising a first, communication-initiating OT device (10) and a second OT device (20) and also an authentication service (50), which, to maintain a logical communication channel (LCC) set up between the first and second OT devices (10, 20), requires successful authorization of a token having a specified validity period by the second OT device (20), the token being generated by the authentication service (50) and supplied to the first OT device (10) for transmission, and checking, to the second OT device (20) if the first OT device (10) meets predetermined criteria, the communication channel (LCC) being terminated if the token is not renewed before an associated validity period or expiration time expires,
**characterized in that**
- the token is processed beyond its validity period or expiration time as an invalid token by the second OT device (20) to authorize the logical communication channel (LCC) when the supply of a follow-up token between the first OT device (10) and the authentication service (50) is not possible or fails.

2. Method according to Claim 1, **characterized in that** the invalid token is processed by the second OT device (20) to set up a logical communication channel (LCC).

3. Method according to Claim 1 or 2, **characterized in that** when the supply of a follow-up token between the first OT device (10) and the authentication service (50) is not possible or fails, the first OT device (10) switches to an alarm mode and transmits status information representing the alarm mode to the second OT device (20).

4. Method according to Claim 3, **characterized in that** on receiving the status information, the second OT device (20) is prompted to process the invalid token for authorization.

5. Method according to Claim 3 or 4, **characterized in that** on receiving the status information, the second OT device (20) is prompted to switch to an alarm mode.

6. Method according to one of Claims 3 to 5, **characterized in that** when the supply of a follow-up token between the first OT device (10) and the authentication service (50) is possible again, the first OT device (10) switches to a normal mode.

7. Method according to Claim 6, **characterized in that** the first OT device (10) transmits the follow-up token to the second OT device (20) together with the status information, or at successive times, for processing and authorization.

8. Method according to Claim 7, **characterized in that** on receiving the follow-up token, the second OT device (20) switches from the alarm mode to the normal mode.

9. Computer program product comprising instructions that, when the program is executed by a computer, prompt said computer to carry out the method according to one of Claims 1 to 8.

10. Industrial control system comprising a first, communication-initiating OT device (10) and a second OT device (20) and also an authentication service (50),
- the authentication service (50) being configured to generate a token if the first OT device (10) meets predetermined criteria and to supply the token to the first OT device (10),
- the first OT device (10) being configured to transmit the token received from the authentication service (50) to the second OT device (20),
- the second OT device (20) being configured to check the token for authorization and, if authorization is successful, to maintain a logical communication channel (LCC) set up between the first and second OT devices (10, 20), and to terminate the logical communication channel (LCC) if the token is not renewed before the validity period expires,
**characterized in that**
the second OT device (20) is also configured to process the token beyond its validity period or expiration time as an invalid token to authorize the logical communication channel (LCC) when the supply of a follow-up token between the first OT device (10) and the authentication service (50) is not possible or has failed.

11. Control system according to Claim 10, furthermore configured to carry out the method according to one of Claims 2 to 8.

## Revendications

1. Procédé destiné à la communication dans un système de commande industriel qui comprend un premier appareil OT (10) initiant une communication et un second appareil OT (20) ainsi qu'un service d'authentification (50), dans lequel pour maintenir un canal de communication logique (LCC) établi entre le premier et le second appareil OT (10, 20) l'autorisation réussie d'un jeton avec une durée de validité prédéterminée par le biais du second appareil OT (20) est nécessaire, dans lequel le jeton est généré par le biais du service d'authentification (50) et est mis à disposition du premier appareil OT (10) pour la transmission et la vérification par le second appareil OT (20), lorsque le premier appareil OT (10) remplit des critères prédéfinis, dans lequel lorsque le jeton n'est pas renouvelé avant l'écoulement d'une durée de validité ou d'un temps d'écoulement qui lui est associé, le canal de communication (LCC) est supprimé, **caractérisé en ce que**
- le jeton est traité par le biais du second appareil OT (20) pour une autorisation du canal de communication logique (LCC) par le biais de sa durée de validité ou de son temps d'écoulement en tant que jeton non valide lorsque la mise à disposition d'un jeton de suivi entre le premier appareil OT (10) et le service d'authentification (50) n'est pas possible ou échoue.

2. Procédé selon la revendication 1, **caractérisé en ce que** le jeton non valide est traité par le biais du second appareil OT (20) pour l'établissement d'un canal de communication logique (LCC).

3. Procédé selon la revendication 1 ou 2, **caractérisé en ce que** le premier appareil OT (10), lorsque la mise à disposition d'un jeton de suivi entre le premier appareil OT (10) et le service d'authentification (50) n'est pas possible ou échoue, passe en mode alarme et transmet une information d'état représentant le mode alarme au second appareil OT (20).

4. Procédé selon la revendication 3, **caractérisé en ce que** le second appareil OT (20) est amené lors de la réception de l'information d'état à traiter le jeton non valide pour l'autorisation.

5. Procédé selon la revendication 3 ou 4, **caractérisé en ce que** le second appareil OT (20) est amené à passer en mode alarme lors de la réception de l'information d'état.

6. Procédé selon l'une quelconque des revendications 3 à 5, **caractérisé en ce que** le premier appareil OT (10), lorsque la mise à disposition d'un jeton de suivi entre le premier appareil OT (10) et le service d'authentification (50) est de nouveau possible, passe en mode normal.

7. Procédé selon la revendication 6, **caractérisé en ce que** le premier appareil OT (10) transmet conjointement avec l'information d'état, ou successivement, le jeton de suivi au second appareil OT (20) pour un traitement et une autorisation.

8. Procédé selon la revendication 7, **caractérisé en ce que** le second appareil OT (20) passe du mode alarme au mode normal lors de la réception du jeton de suivi.

9. Produit de programme informatique, comprenant des instructions qui, lors de l'exécution du programme par le biais d'un ordinateur, amènent celui-ci à exécuter le procédé selon l'une quelconque des revendications 1 à 8.

10. Système de commande industriel, comprenant un premier appareil OT (10) initiant une communication et un second appareil OT (20) ainsi qu'un service d'authentification (50), dans lequel
- le service d'authentification (50) est configuré pour générer un jeton, lorsque le premier appareil OT (10) remplit des critères prédéfinis et pour mettre le jeton à disposition du premier appareil OT (10),
- le premier appareil OT (10) est configuré pour transmettre au second appareil OT (20) le jeton reçu par le service d'authentification (50),
- le second appareil OT (20) est configuré pour vérifier le jeton au moment de l'autorisation et pour maintenir un canal de communication logique (LCC) établi entre le premier et le second appareil OT (10, 20) lorsque l'autorisation est réussie et lorsque le jeton n'est pas renouvelé avant l'écoulement de la durée de validité, pour supprimer le canal de communication logique (LCC), **caractérisé en ce que**
le second appareil OT (20) est en outre configuré pour traiter le jeton pour une autorisation du canal de communication logique (LCC) par le biais de sa durée de validité ou de son temps d'écoulement en tant que jeton non valide lorsque la mise à disposition d'un jeton de suivi entre le premier appareil OT (10) et le service d'authentification (50) n'est pas possible ou a échoué.

11. Système de commande selon la revendication 10, configuré en outre pour exécuter le procédé selon l'une quelconque des revendications 2 à 8.
